# DEMANDE DE BREVET EUROPEEN

(11) **EP 1 255 069 A1**
(43) Date de publication de la demande: **06.11.2002**
(21) Numéro de dépôt: 02356074.1
(22) Date de dépôt: 23.04.2002
(51) Int. Cl.: F16L 37/088

(54) **Dispositif de connexion d'un conduit d'aspiration d'un appareil récupérateur de déchets**

(30) Priorité: 03.05.2001 FR 0105931
(71) Demandeur: SEB S.A., 69130 Ecully (FR)
(72) Inventeur: Soen, Alain, 27950 Saint Marcel (FR); Gellez, Eric, 27420 Cahaignes (FR)
(74) Mandataire: Kiehl, Hubert

(57) **Abrégé**

La présente invention concerne un dispositif de connexion entre deux parties (1) d'un circuit aéraulique d'aspiration d'un appareil récupérateur de déchets, lesdites parties comportant chacune au moins une extrémité (2) de forme sensiblement cylindrique dont une première est prévue pour être insérée dans la seconde (2), caractérisé en ce que :
- la première extrémité présente au moins un ressaut (22) transversal,
- la seconde extrémité (2) comporte une bague élastique (8) fendue logée dans une gorge (6) de l'extrémité (2) et munie d'au moins un ergot radial (10) vers l'intérieur traversant une ouverture de l'extrémité (2) pour s'enclencher, au repos, derrière le ressaut (22) de la première extrémité lorsque insérée dans la seconde,
et en ce qu'il comporte des moyens d'écartement de la bague (8) fendue.

## Description

La présente invention concerne le domaine des appareils récupérateurs de poussières de type aspirateur et plus particulièrement un dispositif de connexion d'éléments constituant, au moins une partie du conduit aéraulique d'aspiration.

Bien que le présent dispositif de connexion puisse être mis en oeuvre entre deux parties quelconques du circuit aéraulique d'aspiration de l'appareil, la présente invention vise notamment la partie aéraulique d'aspiration manipulée par l'utilisateur et qui s'étend, pour un aspirateur de type traîneau, entre le bâti de l'appareil et la tête d'aspiration. Cette partie aéraulique peut ainsi comprendre des conduits rigides ou flexibles, une crosse de manipulation, voire un dispositif amovible de pré-filtration de type par gravitation, inertie ou cyclone.

Il est connu de connecter les différentes parties susnommées du circuit aéraulique par un simple emboîtement à force des parties l'une dans l'autre, ce qui offre, certes, un coût de réalisation très faible, mais présente l'inconvénient majeur de déconnexions intempestives desdites parties lors de la manipulation, pouvant entraîner, en plus de l'agacement de l'utilisateur, des dommages par la chute des parties concernées.

Il est également connu des dispositifs de connexion de type baïonnette qui nécessitent un bon alignement des deux pièces et qui peuvent présenter un risque de déconnexion lors de leur manipulation.

Dans d'autres systèmes, un cliquet disposé sur l'une des pièces, coopère avec une ouverture localisée dans la pièce à connecter, ledit cliquet étant monté contre la force de rappel d'un ressort. Ce système nécessite également l'alignement des deux pièces et peut présenter des dysfonctionnements liés au ressort et à son vieillissement.

La présente invention vise à obvier les inconvénients de l'art antérieur afin de présenter un système de connexion simple et fiable, et d'un prix de revient très faible.

La présente invention est atteinte à l'aide d'un dispositif de connexion entre deux parties d'un circuit aéraulique d'aspiration d'un appareil récupérateur de déchets, lesdites parties comportant chacune au moins une extrémité de forme sensiblement cylindrique dont une première est prévue pour être insérée dans la seconde, caractérisé en ce que :
- la première extrémité présente au moins un ressaut transversal,
- la seconde extrémité comporte une bague élastique fendue logée dans une gorge de l'extrémité et munie d'au moins un ergot radial vers l'intérieur traversant une ouverture de l'extrémité pour s'enclencher, au repos, derrière le ressaut de la première extrémité lorsque insérée dans la seconde,
   et en ce qu'il comporte des moyens d'écartement de la bague fendue.

L'utilisation d'une bague élastique fendue, de type circlip, apporte de nombreux avantages. En effet, par son élasticité, elle offre un moyen simple de réalisation d'une connexion entre deux parties d'un circuit aéraulique d'aspiration puisqu'une seule bague disposant d'ergot(s) mobile(s) dans une ouverture et constituant des butées de blocage permet de réaliser la connexion / déconnexion des deux parties à l'aide des moyens d'écartement de ladite bague fendue.

La bague et ses ergots de maintien constituent par ailleurs un moyen efficace de connexion qui permet d'éviter des déconnexions inopportunes des parties connectées, tout en assurant une bonne rigidité mécanique et une bonne étanchéité à l'air.

L'utilisation d'une bague élastique fendue, en forme de circlip, est, par ailleurs, facilement compréhensible par l'utilisateur car l'effet d'écartement de la bague, afin de permettre le coulissement relatif des deux parties, est techniquement simple et peut être mis en valeur pour une meilleure appréhension.

Cette facilité d'utilisation est renforcée par la simplicité de montage dudit circlip dans la gorge ménagée à cet effet, en utilisant l'effet élastique de la bague fendue pour l'insérer dans ladite gorge.

Les ressauts ménagés dans l'autre extrémité peuvent se présenter, soit sous la forme de décrochements réduisant localement le diamètre de ladite extrémité, soit au contraire sous la forme de saillies augmentant localement le diamètre du conduit. Ils peuvent avantageusement être circulaires afin de simplifier la connexion en évitant des moyens de repérage de l'alignement des deux parties.

Avantageusement, la bague comporte deux ergots disposés symétriquement de part et d'autre de la fente de la bague, permettant de renforcer la tenue mécanique des deux parties entre elles.

Par ailleurs, il est préférable que les deux ergots soient relativement proches de la fente de la bague à l'endroit où l'écartement est le plus important et qui dépend de la cinématique de déformation de ladite bague.

Selon l'un des modes préférés de réalisation de l'invention, les moyens d'écartement consistent en une pièce logée sur l'une des extrémités des parties à connecter et mobile en translation dans la fente de la bague, ladite pièce possédant une géométrie susceptible de coopérer avec les parois délimitant ladite fente afin d'écarter la bague.

Ainsi, l'écartement de la bague est obtenu par une translation d'une pièce dans la fente de ladite bague, ce qui permet de l'écarter, en procurant une indication visuelle pour l'utilisateur de l'action entreprise, ce qui facilite la compréhension du mécanisme de connexion.

Dans une variante de réalisation, la pièce est mobile en direction de la bague contre la force de rappel d'un ressort, ce qui permet le retour automatique de ladite pièce dans une position de repos où elle n'est plus en interaction avec la bague, ce qui simplifie sa manipulation. Ce ressort permet d'assurer le retour de la bague dans sa position de repos lorsque, de par sa construction, elle ne peut créer une force suffisante pour repousser la pièce d'écartement dans sa position d'origine.

Selon l'un des modes de réalisation, la pièce est mobile dans une direction sensiblement parallèle à l'axe de l'extrémité cylindrique sur laquelle elle est agencée, ce coulissement étant en adéquation avec la manipulation des parties à connecter qui nécessite leur coulissement mutuel.

Selon un autre mode de réalisation, la pièce est mobile dans une direction sensiblement radiale par rapport à l'axe de l'extrémité cylindrique sur laquelle elle est agencée.

Selon une mise en oeuvre préférée de l'invention, la pièce est agencée sur la seconde extrémité portant la bague, ce qui permet de simplifier la première extrémité à connecter, et qui offre donc l'avantage d'une conception simple de ladite partie.

Selon cette mise en oeuvre, une variante de réalisation consiste à ce que les deux parties soient des tubes et en ce que le tube exempt de bague comporte des ressauts régulièrement espacés permettant, par coopération avec le ou les ergots de la bague, d'arrêter le coulissement dudit tube dans l'une des positions déterminées par l'emplacement des décrochements.

Cette variante de réalisation permet la conception de tubes télescopiques où les ressauts représentent les positions d'arrêt du tube dans son coulissement. La manipulation d'un tel tube télescopique est alors simple, tout comme sa réalisation.

Avantageusement, la partie portant la bague est un manchon de raccordement venant coiffer l'extrémité, soit d'un tube de raccordement cylindrique, soit d'un conduit flexible, soit d'une crosse de manipulation, soit d'un suceur d'aspiration, soit d'un conduit d'entrée d'air relié au bâti de l'aspirateur.

La présente invention est illustrée par la description suivante, en référence aux figures annexées, parmi lesquelles :
- les figure 1, 2 et 3 présentent le principe de connexion entre deux tubes selon la présente invention, les deux tubes étant respectivement désengagés, engagés, connectés, dans une vue en coupe,
- la figure 4 présente un détail constitutif de la présente invention,
- les figures 5 à 10 présentent différentes variantes de mise en oeuvre de l'invention.

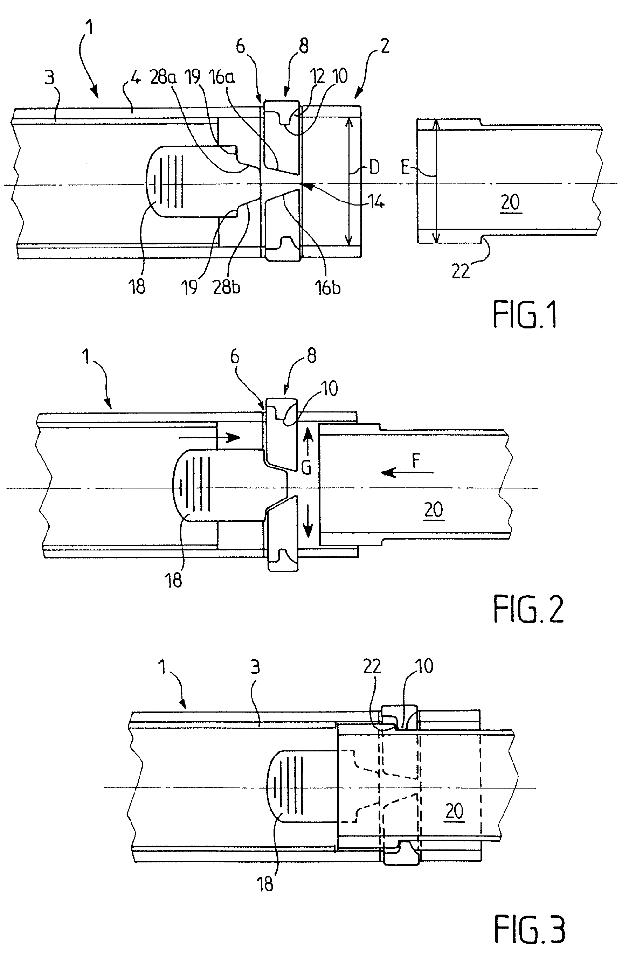

Selon la présente invention, tel qu'un exemple de réalisation est proposé figure 1, une partie constituée par un tube 20 est destinée à être connectée à une autre partie 1 présentant une extrémité 2

Selon l'exemple proposé, la partie 1 est un manchon 4 agencé sur un tube 3. Le manchon 4 est proéminent du tube 3 et présente à son extrémité, un diamètre intérieur D légèrement supérieur au diamètre extérieur E du tube 20. Cette caractéristique permet l'emboîtement du tube 20 dans l'extrémité 2 de la partie 1.

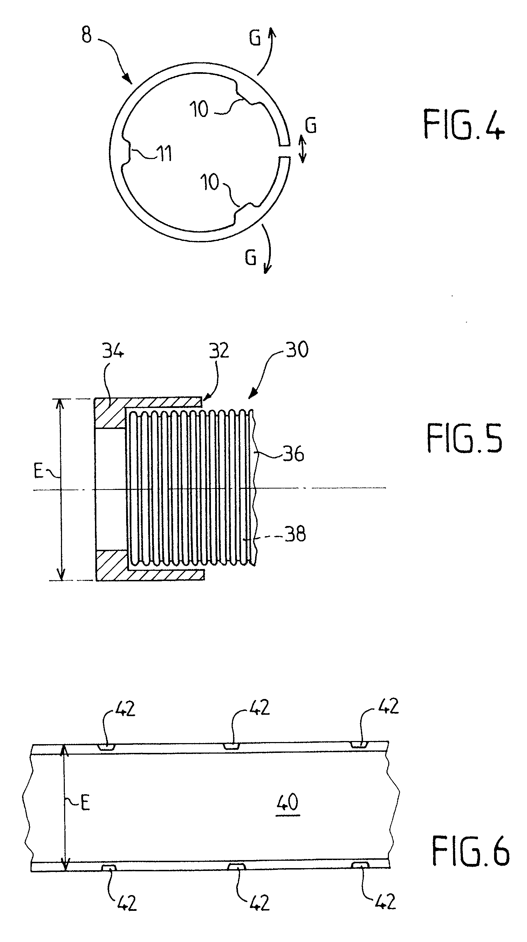

Selon la présente invention, la partie 1 porte une bague élastique fendue 8 ayant la forme et la fonction d'un circlip. Ainsi ladite bague est fendue en 14 et agencée dans une gorge 6 ménagée au niveau de l'extrémité 2 de la partie 1. Cette bague porte avantageusement des ergots 10 dirigés vers l'intérieur de la bague, comme il est bien visible à la figure 4.

Selon l'exemple proposé, la bague possède un téton 11 qui l'empêche de tourner lors de l'écartement des deux parties situées de part et d'autre de la fente 14. Ce téton n'est pas indispensable, notamment dans le cas présenté où l'action symétrique de la pièce sur les deux ergots ne génère pas, à priori, de rotation de la bague.

Le manchon 4 dispose également d'un moyen d'écartement de la bague 8 par l'intermédiaire d'un organe de commande 18 monté en coulissement longitudinal vers la fente de la bague 8, éventuellement contre la force de rappel d'un ressort (non représenté).

Pour ce faire, la bague 8 et l'organe de commande 18 présentent une conformation permettant leur interaction mutuelle sans blocage. Ainsi, les parois 16a, 16b délimitant la fente 14 de la bague sont biseautées, la fente étant divergente en direction de l'organe de commande 18 qui présente également deux parois chanfreinées 28a, 28b, en convergence vers ladite fente 14, la divergence de la fente étant de préférence supérieure à la convergence de l'organe de commande.

La pièce 18 peut être conformée de telle manière à ce que sa partie supérieure masque les parois 16a, 16b ainsi que la fente 14, permettant d'isoler les parties interactives des éventuelles poussières ou autres particules qui pourraient générer des dysfonctionnements.

Bien que cela ne soit pas indispensable pour la mise en oeuvre de la présente invention, il peut s'avérer utile d'améliorer l'étanchéité du dispositif de connexion présenté. Par rapport à la configuration décrite, ces moyens d'étanchéité peuvent se présenter sous la forme d'un joint à lèvres contre la paroi intérieure du manchon, après les ouvertures laissant pénétrer les ergots à l'intérieur de l'extrémité 2 de la partie 1, soit entre le tube 20 et le tube 3, par exemple par un joint torique placé en bout de ce tube 3. D'autres dispositifs peuvent être utilisés pour limiter les fuites sans sortir du cadre de la présente invention.

L'opération de connexion se déroule ainsi, illustrée par les séquences des figures 1 à 3:
- l'utilisateur approche le tube 20 de la partie 1 et commence à l'introduire dans l'extrémité 2, selon la direction F,
- lorsque l'utilisateur sent que le tube 20 rencontre les ergots 10, ou dès l'introduction du tube 20 dans l'extrémité 2, il fait alors coulisser la pièce 18 pour l'engager dans la fente 14 de la bague 8 et écarter, selon la direction G, les deux parties situées de part et d'autre de la bague (figure 2). Cette action entraîne un coulissement des ergots 10 hors des lumières ménagées dans la gorge 6 permettant ainsi au tube de s'introduire davantage dans la partie 1, le ressaut 22, qui se présente sous la forme d'un décrochement, passant alors au delà des ergots 10. Avantageusement, tel que suggéré dans cet exemple de réalisation, la pièce est centrée par rapport à la fente 14, de telle sorte que les forces d'action de part et d'autre de la pièce qui s'insère dans la bague soient équilibrées, favorisant le glissement de la pièce et l'écartement des deux parties de la bague. L'utilisateur amène alors l'extrémité du tube 20 en butée contre l'extrémité du tube interne 3.
- l'utilisateur relâche alors son effort sur la pièce 18 qui reprend sa position initiale (grâce à la force de rappel du ressort ou par l'effet élastique de la bague qui, en se resserrant, chasse la pièce 18) où elle est désengagée de la bague 8. Ceci entraîne, par l'effet élastique inhérent de la bague, son resserrement sur la gorge 6, les ergots 10 reprenant leur position initiale, au travers des ouvertures ménagées dans la gorge, et bloquant le tube 20 par enclenchement des ergots 10 derrière les ressauts 22.

Il est à noter que l'utilisateur peut relâcher sa pression sur la pièce 18 dès lors que le tube 20 est passé au delà des ergots 10, ces derniers venant automatiquement s'enclencher derrière les ressauts 22 par l'effet élastique de la bague 8.

Le positionnement de la bague par rapport à l'extrémité du tube 3 est judicieusement choisi en correspondance avec la distance séparant le décrochement 22 de l'extrémité du tube 20, de telle sorte que lorsque ledit tube 20 arrive en butée sur l'extrémité du tube 3, le décrochement 22 vienne juste de passer au delà de l'ergot 10. Ceci, d'une part donne l'indication à l'utilisateur que les deux parties sont correctement positionnées et d'autre part évite que les deux parties présentent un jeu en coulissement trop important pouvant être gênant lors de la manipulation, et générer des problèmes d'étanchéité.

Dans une variante de réalisation, le téton 11 est agencé sur un axe de pivotement, ce qui permet d'augmenter la fiabilité de la connexion en assurant systématiquement le déplacement des ergots 10 dans un même mouvement lors de l'action de poussée de la pièce 18.

Il peut être prévu, tel que suggéré sur les figures 1 à 3, que les décrochements dans la bague 8 formant les ergots 10 présentent, du côté de l'extrémité 2, dans le sens longitudinal, non pas un angle sensiblement droit, mais une pente 12 ou une courbure continue, de manière à pallier à une introduction brutale du tube 20 dans la partie 1. En effet, un tel mouvement pourrait endommager l'ergot et donc la bague 8. La réalisation d'une pente ou d'une courbure permet, lorsque le tube 20 est manipulé avec force dans la partie 1 contre les ergots 10, d'écarter la bague et de réaliser la connexion.

Cette action qui peut s'apparenter à un mode opératoire "rapide" n'est cependant pas recommandée car elle détériore rapidement les ergots 10.

Ces derniers seront préférentiellement disposés à l'opposé l'un de l'autre selon un diamètre, de façon symétrique par rapport à la fente, afin de minimiser les déplacements ainsi que les efforts à exercer sur la pièce 18.

Dans une variante de réalisation, les ergots ne sont pas disposés selon un diamètre, mais légèrement plus proche de la fente, afin que le téton 11 ne puisse sortir de son logement. Ainsi l'angle entre les deux ergots sera alors de l'ordre de 150°, tel qu'il est visible figure 4.

La figure 5 montre la mise en oeuvre de la présente invention avec l'utilisation d'un conduit souple 30, plus communément appelé flexible, dont une forme couramment rencontrée et dénommée "strech-hose" consiste en une gaine en plastique souple 36 ménageant une cavité en spirale dans laquelle est logé un fil métallique 38 enroulé en hélicoïde, tel un ressort. L'une des extrémités de ce conduit souple comporte une partie rigide cylindrique 34 maintenue au flexible par tout moyen connu, tel un clipage sur les premières "spires" du flexible. La partie cylindrique 34 présente un diamètre extérieur E et comporte un décrochement 32 susceptible de coopérer avec les ergots 10 de la partie 1 tel qu'il a été expliqué précédemment.

La figure 6 montre une extension de la présente invention à la réalisation d'une connexion pour tube télescopique. Ainsi un conduit 40, de diamètre extérieur E dispose, régulièrement répartis sur sa longueur, de décrochements 42 susceptibles de coopérer avec les ergots 10 de la partie 1. Ces décrochements, à la différence des décrochements précédemment décrits, sont ponctuels et de longueur correspondant sensiblement à la longueur des ergots 10, de manière à ce que lesdits ergots 10 immobilisent en coulissement le tube 40 lorsqu'ils coopèrent avec les décrochements 42.

La partie 1 est alors un tube de diamètre interne D et comportant une bague, tel que précédemment expliqué, susceptible de recevoir, sur toute la zone de coulissement autorisée, le conduit 40.

Dès lors, par des actions successives de la pièce 18 sur la bague 8, ou par un maintien écarté de celle-ci, on permet le coulissement du tube 40 dans la partie 1 jusqu'à la position désirée. Un relâchement de la pièce 18 permet aux ergots 10 de venir à nouveau en appui sur le tube 40. L'utilisateur, par un mouvement de coulissement du tube 40 dans la partie 1, permet alors aux ergots 10 de venir se loger dans l'un des décrochements du conduit 40.

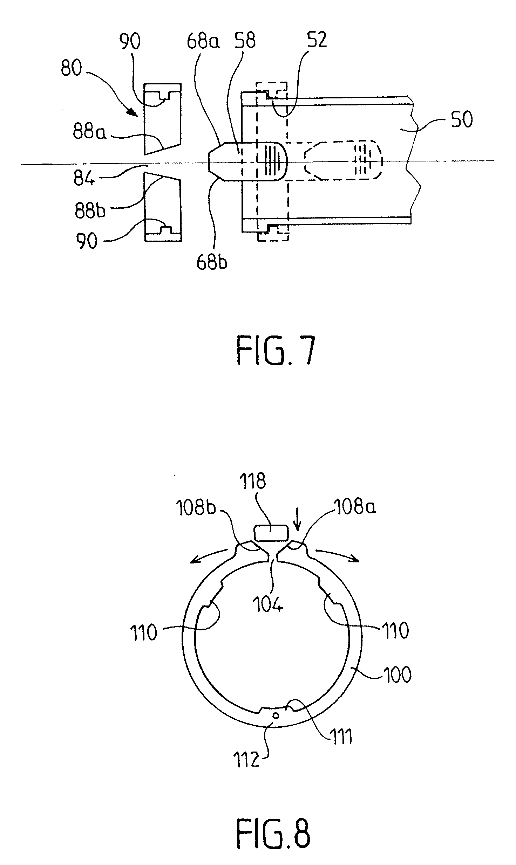

La figure 7 présente une variante de réalisation de la présente invention où la pièce 58 d'écartement de la bague 80, est localisée sur le tube 50, c'est à dire sur la partie ne comportant pas la bague 80. Cette disposition, par rapport à la disposition précédemment décrite entraîne deux changements significatifs :
- les parois 88a et 88b délimitant la fente 84 de la bague 80 sont inclinées en divergeant vers la pièce 58, c'est à dire vers l'extrémité de la partie 1,
- la pièce 58 présente un coulissement le long du tube 50 plus important que celui décrit précédemment afin, d'une part, lorsqu'elle est en position d'interaction avec la bague, d'agir avant que l'extrémité du tube 50 ne heurte les ergots 90 de la bague 80, et d'autre part en position de repos, d'éviter d'écarter la bague lorsque l'interaction entre les ergots 90 et le décrochement 52 a lieu.

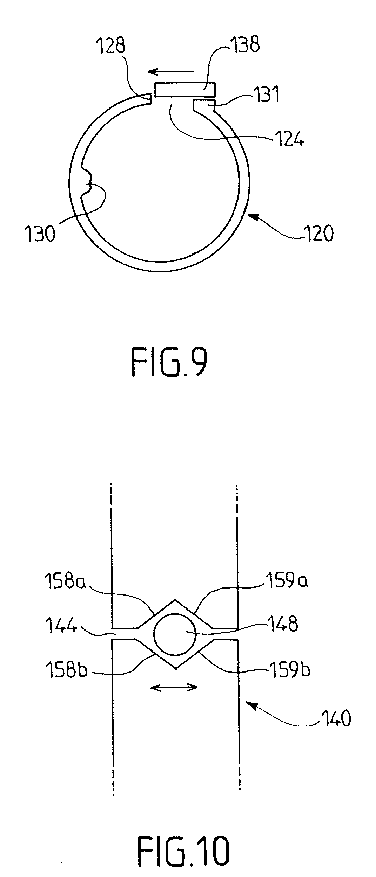

Les figures 8 et 9 présentent deux variantes de réalisation de la bague et de la pièce d'écartement. Sur la figure 8, la bague 100 présente deux ergots 110 tels que précédemment décrits ainsi qu'un téton 111 de fixation de la bague. Cette dernière dispose d'une fente 104 présentant au moins deux pentes radiales 108a, 108b. La pièce 118 d'écartement de la bague 100 est mobile de façon radiale, éventuellement contre la force de rappel d'un ressort et permet d'écarter la bague 80 par interaction avec les pentes 108a, 108b.

Comme expliqué précédemment, certaines configurations de connexions peuvent nécessiter que le téton 111 soit agencé sur un axe de pivotement 112, afin que les ergots 110 se déplacent dans un même mouvement lors de l'action de poussée de la pièce 118.

Comme il est donc bien visible sur cette figure 8, la variante de cette connexion par rapport aux précédentes réside dans l'interaction entre la pièce d'écartement et la bague, interaction qui est sensiblement radiale par rapport à la bague, dans une direction parallèle au plan de section de ladite bague.

Dans la variante de réalisation présentée figure 9, la bague 120 présente un seul ergot 130 de blocage. La bague est maintenue dans son logement par le téton 131 qui délimite également la fente 124 de ladite bague. Une pièce d'interaction 138 est mobile selon la direction indiquée, c'est à dire tangentiellement à la bague, dans une direction parallèle au plan de section de ladite bague. Le déplacement de cette pièce, éventuellement contre la force de rappel d'un ressort, permet, par interaction avec le bord 128 de la bague 120 délimitant la fente 124, d'écarter l'ergot 130.

Cette disposition présente l'avantage, en ne proposant qu'un seul ergot de blocage, de minimiser les risques de fuite d'air.

La figure 10 montre une autre variante de réalisation de la présente invention en détaillant la fente 144 de la bague 140 partiellement représentée. La fente 144 présente un espace central à l'intérieur duquel se trouve une pièce 148 d'écartement de ladite bague, cet espace étant globalement délimité par quatre parois, les parois 158a, 158b convergeant vers l'un des flancs de la bague, les parois 159a, 159b convergeant vers l'autre flanc de la bague, de façon sensiblement symétrique aux parois 158a, 158b.

La pièce d'écartement 148 est mobile tangentiellement à la bague, dans une direction perpendiculaire au plan de section de ladite bague, comme dans les exemples présentés aux figures 1 à 7. Par rapport à ces exemples, cette variante s'en différencie par le fait que la pièce d'interaction 148 peut écarter la bague en étant déplacée linéairement dans les deux sens, soit par interaction avec les pentes 158a, 158b, soit par interaction avec les pentes 159a, 159b. Ce choix peut s'avérer pratique selon que l'on veuille connecter ou déconnecter les deux parties. Comme précédemment, un ressort de rappel peut être inséré dans le montage de la pièce 148 afin de maintenir, au repos, ladite pièce sensiblement de au centre de l'espace défini par les pentes 158a, 158b, 159a, 159b.

La pièce d'écartement peut faire partie d'un manchon rapporté sur la fente de la bague, ce qui permet une bonne prise en main du dispositif et permet d'assurer le guidage et le maintien de la bague fendue lors de son ouverture et lors de son retour en position.

La forme des ressauts ou des décrochements peut présenter diverses formes, notamment en ce qui concerne leur flanc, afin d'ajuster la facilité de coopération entre lesdits ressauts / décrochements et les portions de bague correspondantes, selon la fonction recherchée et la nature des pièces en interaction. La forme des ergots est bien évidemment adaptée à la configuration des ressauts / décrochements.

## Revendications

1. Dispositif de connexion entre deux parties (1, 20, 30, 40, 50) d'un circuit aéraulique d'aspiration d'un appareil récupérateur de déchets, lesdites parties comportant chacune au moins une extrémité (2) de forme sensiblement cylindrique dont une première est prévue pour être insérée dans la seconde (2), **caractérisé en ce que** :
- la première extrémité présente au moins un ressaut (22, 32, 42, 52) transversal,
- la seconde extrémité (2) comporte une bague élastique (8, 80, 100, 120, 140) fendue logée dans une gorge (6) de l'extrémité (2) et munie d'au moins un ergot radial (10, 90, 110, 130) vers l'intérieur traversant une ouverture de l'extrémité (2) pour s'enclencher, au repos, derrière le ressaut (22, 32, 42, 52) de la première extrémité lorsque insérée dans la seconde,
et **en ce qu'**il comporte des moyens d'écartement de la bague (8, 80, 100, 120 140) fendue.

2. Dispositif de connexion selon la revendication précédente, **caractérisé en ce que** le ressaut (22, 32, 42, 52) est circulaire.

3. Dispositif de connexion selon l'une des revendications précédentes, **caractérisé en ce que** la bague (8, 80, 100, 140) comporte deux ergots (10, 90, 110) disposés symétriquement de part et d'autre de la fente (14, 84, 104, 144) de la bague (8, 80, 100, 140).

4. Dispositif de connexion selon l'une des revendications précédentes, **caractérisé en ce que** les moyens d'écartement consistent en une pièce (18, 58, 118, 138, 148) logée sur l'une des extrémités des parties (1, 50) à connecter et mobile en translation dans la fente (14, 84, 104, 124, 144) de la bague (8, 80, 100, 120, 140), ladite pièce (18, 58, 118, 138, 148) possédant une géométrie susceptible de coopérer avec les parois (16a, 16b, 88a, 88b, 108a, 108b, 128, 158a, 158b, 159a, 159b) délimitant ladite fente (14, 84, 104, 124, 144) afin d'écarter la bague (8, 80, 100, 120, 140).

5. Dispositif de connexion selon la revendication précédente, **caractérisé en ce que** la pièce (18, 58, 118, 138, 148) est mobile en direction de la bague (8, 80, 100, 120, 140) contre la force de rappel d'un ressort.

6. Dispositif de connexion selon l'une des revendications 4 ou 5, **caractérisé en ce que** la pièce (18, 58, 138, 148) est mobile dans une direction sensiblement parallèle à l'axe de l'extrémité cylindrique sur laquelle elle est agencée.

7. Dispositif de connexion selon l'une des revendications 4 ou 5, **caractérisé en ce que** la pièce (118) est mobile dans une direction sensiblement radiale par rapport à l'axe de l'extrémité cylindrique sur laquelle elle est agencée.

8. Dispositif de connexion selon l'une des revendications 4 à 7, **caractérisé en ce que** la pièce (18, 118, 138, 148) est agencée sur la seconde extrémité (2) portant la bague (8, 100, 120, 140).

9. Dispositif de connexion selon la revendication précédente, **caractérisé en ce que** les deux parties sont des tubes (40) et **en ce que** le tube (40) exempt de bague comporte des ressauts (42) régulièrement espacés permettant, par coopération avec le ou les ergots (10, 110, 130) de la bague (8, 100, 120, 140), d'arrêter le coulissement dudit tube (40) dans l'une des positions déterminées par l'emplacement des ressauts (42).

10. Dispositif de connexion selon l'une des revendications précédentes, **caractérisé en ce que** la partie portant la bague (8) est un manchon de raccordement venant coiffer l'extrémité, soit d'un tube de raccordement cylindrique (3), soit d'un flexible, soit d'une crosse de manipulation, soit d'un suceur d'aspiration, soit d'un conduit d'entrée d'air relié au bâti de l'aspirateur.
